# EUROPEAN PATENT APPLICATION

(11) **EP 4 653 197 A1**
(43) Date of publication of application: **26.11.2025**
(21) Application number: 24707250.7
(22) Date of filing: 15.01.2024
(51) Int. Cl.: B41J 2/44, B41J 11/00, B41J 3/407, C03C 17/00, B41M 5/00, B41M 5/24

(54) **MACHINE FOR DIGITAL GLASS PRINTING FITTED WITH PICKLING MEANS, AND PRINTING METHOD**

(30) Priority: 19.01.2023 ES 202330031
(71) Applicant: Tecglass SL, 36500 Lalin (Pontevedra) (ES)
(72) Inventor: FERNÁNDEZ VÁZQUEZ, Juan Javier, 36500 Lalin (Pontevedra) (ES); BARROS LÓPEZ, José Manuel, 36500 Lalin (Pontevedra) (ES)
(74) Representative: Pons Ariño, Angel
(86) International application number: PCT/ES2024/070021
(87) International publication number: WO 2024/153842

(57) **Abstract**

Machine comprising at least one input scanner (1) and printing means and with laser pickling means (2) arranged so that laser pickling occurs before digital printing, which may be located before or after an input scanner (1), these laser pickling means being applicable both for "single-pass" multi-track or roller machines, and for multi-stage machines placed on the print head mounted on the print bridge, the laser heads can be of CO2 or fibre. A complete and effective elimination of functional films mounted on glass is achieved.

## Description

### OBJECT OF THE INVENTION

The object of the present invention, as the title of the invention indicates, is a machine for digital glass printing fitted with pickling means, as well as the printing process carried out on said machine in which a pickling step is applied.

The present invention is characterized by the combination and/or integration of means, as well as the nature of the means used to perform the pickling of the glass prior to its printing.

Therefore, the present invention belongs to the field of digital glass printing machines and means for pickling glass prior to printing.

### BACKGROUND TO THE INVENTION

Increasingly, natural glasses are treated with a functional film based on different metals. These metals are usually applied on glass by the PVD (Physical Vapour Deposition) method, which consists of a physical-thermal collision process that transforms the material to be deposited, called the target, into atomic particles, which are directed to the substrates in a gaseous plasma state through a vacuum atmosphere, generating a physical coating by condensation of projected atoms.

This film has different compositions and layers depending on the functional characteristic that is to be given to the glass, which can be among other things:
- Low-emissivity films to reduce the passage of infrared radiation through the glass, reducing heat loss or gain. Infrared reflective films are usually conductive metals such as silver, gold, copper ...that reduce radiant heat transmission.
- Transparent dielectric films are mainly used to reduce visible reflectance and control other coating properties, such as colour. Commonly used transparent dielectrics include zinc, tin, indium, indium, bismuth and titanium oxides, and alloys and mixtures thereof, as well as certain nitrides (e.g., silicon nitride and titanium nitride). Low-emissivity coatings are typically deposited on glass substrates using known magnetron sputtering techniques.
- Photocatalytic films are applied to provide self-cleaning characteristics to glass. Titanium oxide is said to be the most powerful photocatalytic material.
- Hydrophobic films to repel water from the glass surface
- Hydrophilic films to prevent water accumulation and glass staining as stated in the US patent Ser. Nos. 09/868,542, 09/868,543, 09/599,301, and 09/572,766.
- Anti-reflective films, which may be of silica.
- More functional films

These films that are applied to glass that are of different metals can be very easily attacked by chemical agents, especially for example those with a high content in silver that is especially vulnerable. When silver corrodes, a degradation of the film and its functionality occurs.

Therefore, these films, especially those of low emissivity with high silver content, are limited to use on the inner face of a double-glazed insulating glass where it is protected from exposure to the outside.

In order for the film to be fully protected from the external environment, the film must be removed from the external contact zone to prevent corrosion of the metals. Then, depending on the type of seal, for example, a 10 mm section is eliminated around the entire perimeter so that, when the unit is sealed, the film is encapsulated inside the unit and isolated from corrosion.

Therefore, when producing glass with low-emissivity films for the end user, the film has to be removed from the edges or areas where the glass is glued for the following reasons:
- To prevent the film from degrading by corrosion in contact with the environment.
- To avoid problems of glass adhesion to substrates such as aluminium, since these films prevent correct adhesion between glass and metal, for example with silicones.

In addition, these areas where the film is removed are usually coated with black ceramic ink so that the gluing or sealing area of the glass is hidden.

To perform this removal of the layer there are machines that do the removal mechanically with a grinding wheel, for example that of patent US 6,988,938 B2.

Also, on the other hand, there are enamels and printing methods to dissolve this film, avoiding having to remove it mechanically and simplifying the process as described in patent WO 2014/133929 A2.

In addition, there are special enamels that dissolve functional films, but do not always achieve complete dissolution depending on the film thickness and composition.

Therefore, the object of the present invention is to avoid having to perform a mechanical removal of the functional films of the glasses prior to digital printing, as well as to avoid the use of enamels or complex printing methods that allow the functional sheet to be removed, developing a machine that has pickling means to simplify the process in addition to allowing said means to be integrated into the machine either from its manufacture or once the machine has been manufactured.

### DESCRIPTION OF THE INVENTION

The object of the present invention is to solve the problem that arises when printing with a ceramic ink on a glass having a functional film by incorporating laser heads into the machine to eliminate the functional film of the glasses before printing.

Depending on the speed of passage of the glasses through the print heads, a complete elimination of the functional film or a partial elimination can be achieved, in this case leaving the remains of the unetched film left to the printing ink, which, by its nature, particle size and content is able to eliminate the rest of the functional film not removed by the laser heads.

Therefore, we could have two ways to remove the functional film, a first one, in which the entirety of the functional film is eliminated by the laser means arranged in the machine, achieving an average elimination speed of 6 m / minute, and then proceeding to print with conventional inks, without having to use inks that dissolve the particles.

There would be a second procedure to remove the functional sheet in which in combination the laser pickling means act in combination with inks that dissolve the films. The laser pickling means act first and allow the laser to be worked at an average speed of up to 14 m / minute, then printing is carried out with inks that dissolve the films.

The laser pickling means consist of laser heads, which can be of CO2 or fibre, which are arranged before the printing means. In the case of being integrated into a machine, they are arranged either after having passed through an input scanner or before the scanning means, and said pickling may be also performed as a prior action before passing a digital printing machine.

Machines that have laser stripping means, either manufactured or integrated afterwards, can be "single-pass" machines, they can also be multi-pass machines.

The means described above achieves complete removal of functional films efficiently and completely, with the means integrated into the machine itself, achieving simple and efficient machines in the process of removing functional films arranged on glass.

Unless indicated otherwise, all the technical and scientific elements used in this specification have the meaning usually understood by a person skilled in the art to which this invention belongs. In the practice of this invention, methods and materials similar or equivalent to those described in the specification may be used.

In the description and claims, the word "comprises" and its variants do not intend to exclude other technical characteristics, additives, components or steps. For persons skilled in the art, other objects, advantages and characteristics of the invention will be partly inferred from the description and partly from the practice of the invention.

### EXPLANATION OF THE FIGURES

In order to complement the description being made herein, and with the object of aiding the better understanding of the characteristics of the invention, in accordance with a preferred practical embodiment thereof, said description is accompanied, as an integral part thereof, by a set of drawings where, in an illustrative and non-limiting manner, the following has been represented:
Figure 1 shows a general representation of a digital glass printing machine fitted with laser pickling means.
Figure 2 shows the previous machine where the laser pickling means are CO2 heads.
In Figure 3, the machine of figure 1 is shown where the laser pickling means with fibre heads.
Figure 4 shows a multi-track machine fitted with laser pickling means, either with CO2 heads or with fibre heads
Figures 5 and 6 show multi-pass machines with CO2 heads and with fibre heads respectively.
Figures 7 and 8 show respective multi-track machines where the laser pickling means, either by means of CO2 heads or with fibre heads, are placed before the scanning unit.

### PREFERRED EMBODIMENT OF THE INVENTION

In view of the figures, a preferred embodiment of the proposed invention is described below.

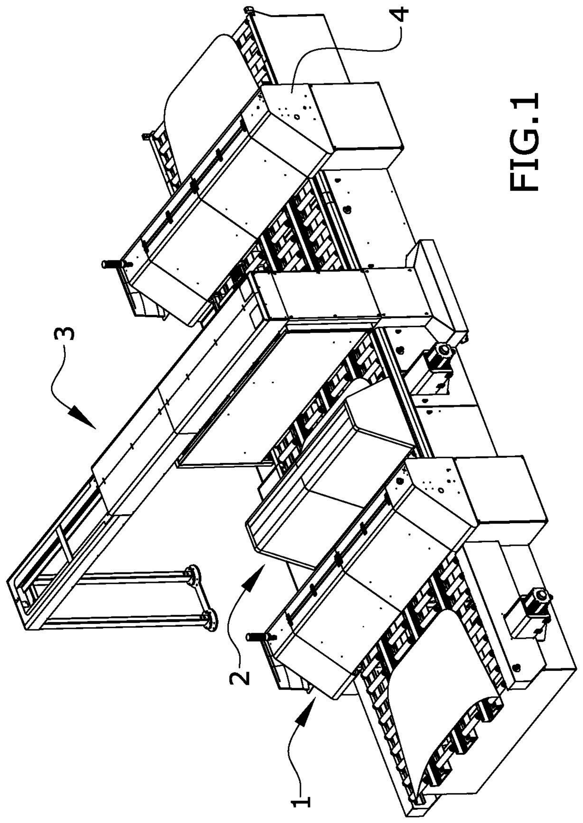

Roller feed machines are shown in Figures 1 to 3.

Figure 1 shows a general representation of a digital glass printing machine fitted with laser pickling means, which shows an input scanner (1), a laser pickling means (2) arranged below, a print bridge (3) placed at the outlet of the laser pickling means (2) and finally a control scanner (4) which is optional.

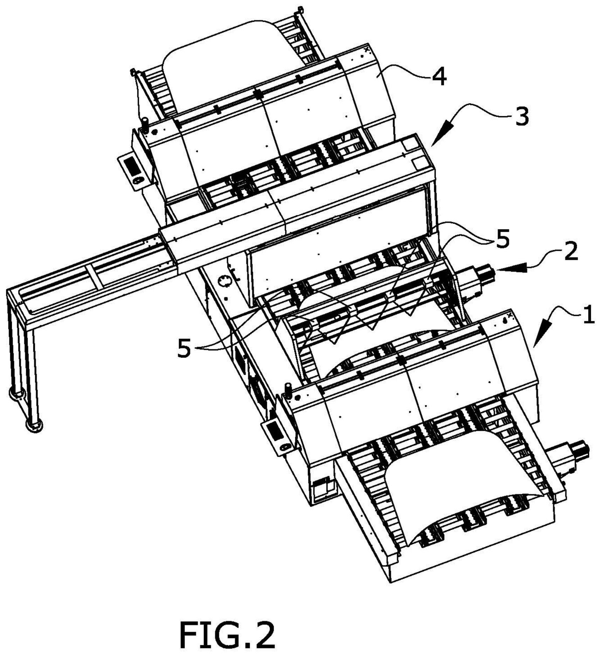

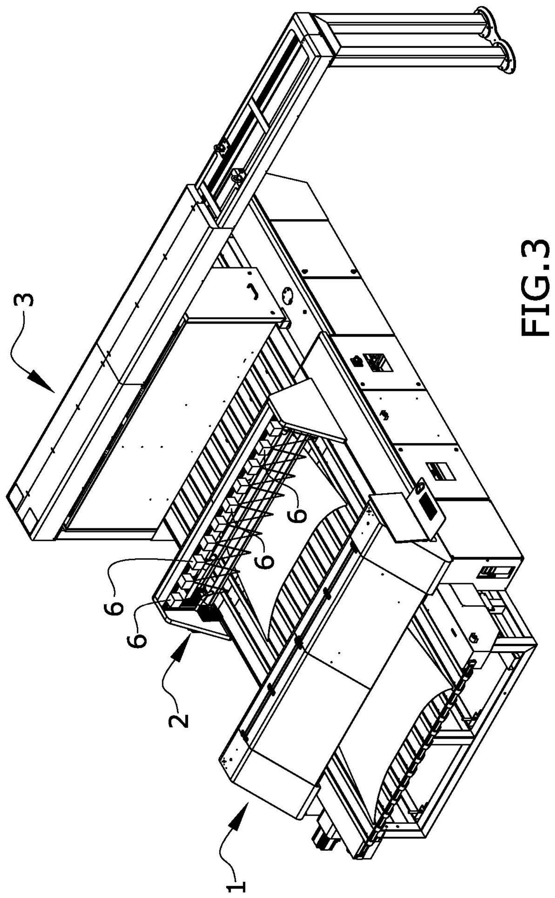

Figure 2 shows that the laser pickling means (2) have CO2 heads (5), while Figure 3 shows that the laser pickling means (2) have fibre heads (6).

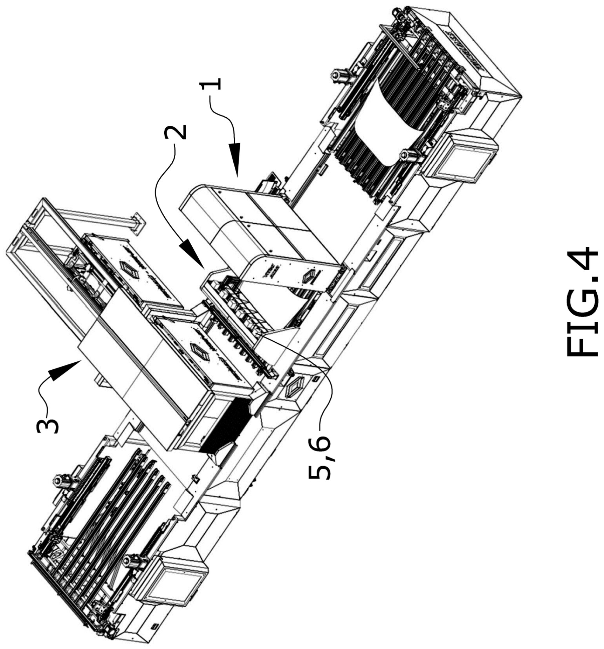

Figure 4 shows a multi-track machine fitted with laser pickling means (2), either with CO2 heads (5) or with fibre heads (6).

The laser heads (5) or (6) are preferably mounted so that the radius of action of each of them is intertwined with the adjacent laser head (s), in a fully synchronised manner increasing the possible pickling width depending on the in-line heads that are installed.

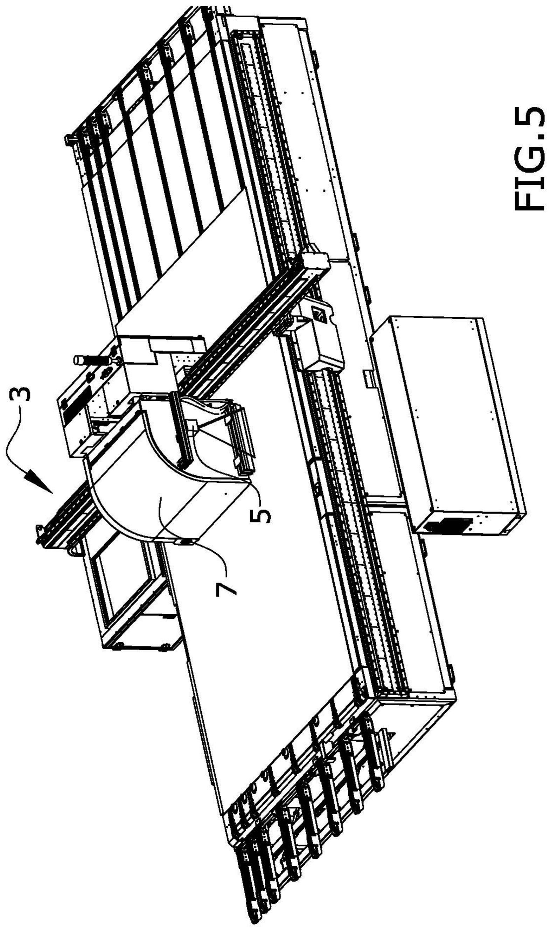

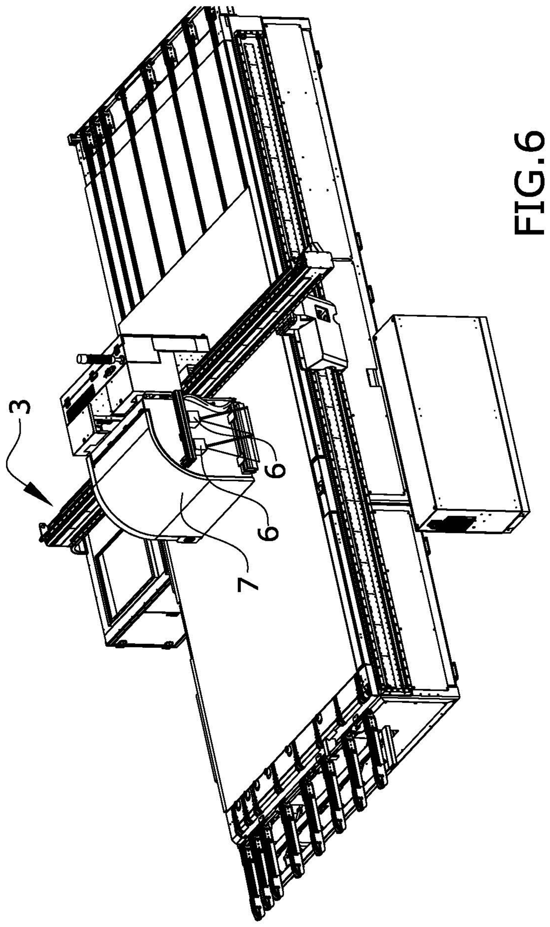

Figures 5 and 6 show multi-pass machines, where on the print bridge (3) there are print heads (7) that are fitted with either CO2 heads (5) or fibre heads (6) respectively, the pickling process being carried out before printing and taking advantage of the side-to-side movement of the print heads (7).

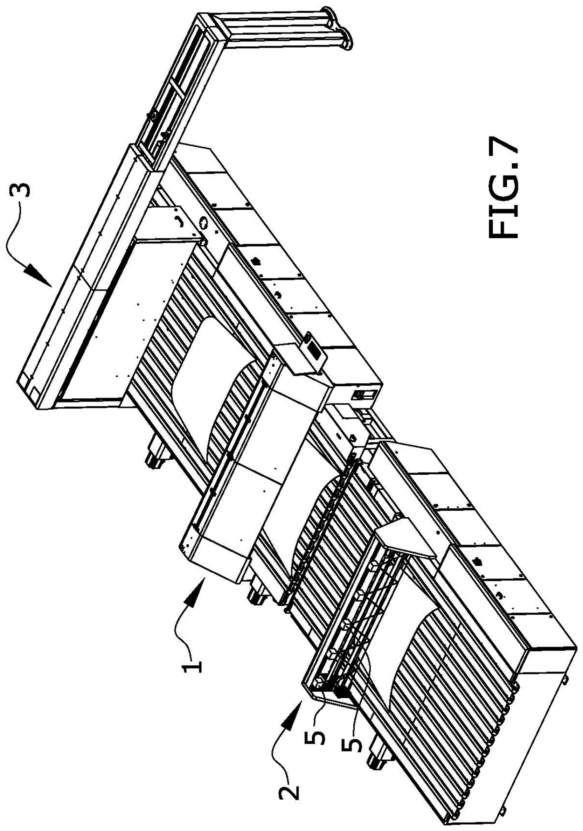

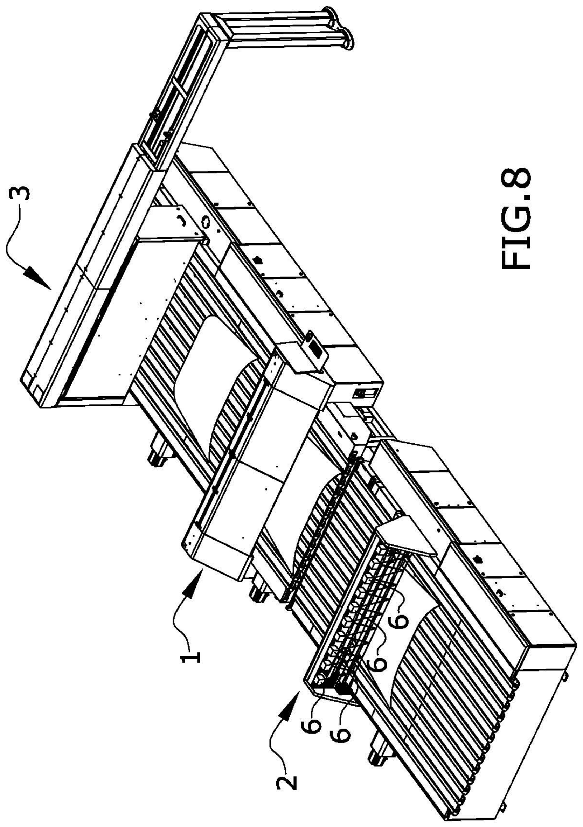

Figures 7 and 8 show multi-track machines where it is intended to demonstrate that the laser pickling means (2), either by means of CO2 heads (5) or with fibre heads (6), can be placed before the scanning unit (2).

Having sufficiently described the nature of the present invention, in addition to the manner in which to put it into practice, it is hereby stated that, in its essence, it may be put into practice in other embodiments that differ in detail from that indicated by way of example, and to which the protection equally applies, provided that its main principle is not altered, changed or modified.

## Claims

1. Machine for digital printing fitted with pickling means comprising at least one input scanner (1) and digital printing means **characterized in that** it has laser pickling means (2) arranged so that laser pickling takes place before digital printing.

2. Machine for digital printing fitted with pickling means according to claim 1 **characterised in that** the laser pickling means (2) are positioned before or after the input scanner (1).

3. Digital printing machine fitted with pickling means according to claim 1 or 2, **characterised in that** the digital printing means consist of a printing bridge (3) positioned at the outlet of the laser pickling means (2).

4. Machine for digital printing fitted with pickling means according to claim 3, **characterized in that** the machine is a "single-pass" machine.

5. Machine for digital printing fitted with pickling means according to claim 1 or 2, **characterised in that** the digital printing means consist of a print bridge (3) fitted with print heads (7) on which the laser pickling means (2) are fixed so as to perform pickling before digital printing.

6. A digital printing machine fitted with pickling means according to any of the preceding claims, **characterised in that** the laser pickling means (2) comprise CO2 laser heads.

7. Digital printing machine fitted with pickling means according to any of claims 1 to 6 **characterised in that** the laser pickling means (2) comprise fibre laser heads.

8. Machine for digital printing fitted with pickling means according to any of the preceding claims, **characterized in that** the machine has an output scanner (4).

9. A digital printing machine fitted with pickling means according to any of claims 5 to 8 **characterised in that** the laser heads (5) or (6) are mounted so that the radius of action of each of them is intertwined with the adjacent laser head (s), in a fully synchronised manner.

10. Method for digital printing with the machine fitted with pickling means according to any of the preceding claims 1 to 9 **characterised in that** the pickling means (2) are based on laser heads that proceed to remove all the functional film with an average removal speed of 6 m / minute, and then subsequently proceed to print with conventional inks.

11. Method for digital printing with the machine fitted with pickling means according to any of the preceding claims 1 to 9 **characterised in that** the pickling means (2) are based on laser heads that proceed with the partial removal of the functional film in combination with inks that dissolve the functional film, where the pickling means act at an average speed of 14 m/min.
